# EUROPÄISCHE PATENTSCHRIFT

(11) **EP 1 301 697 B1**
(45) Veröffentlichungstag und Bekanntmachung des Hinweises auf die Patenterteilung: **21.09.2005**
(21) Anmeldenummer: 01984343.2
(22) Anmeldetag: 06.07.2001
(51) Int. Cl.: F02C 6/00, F02C 7/22, F02C 3/22

(54) **GASTURBINE UND VERFAHREN ZUM BETRIEB EINER GASTURBINE**
GAS TURBINE AND METHOD FOR OPERATING A GAS TURBINE
TURBINE A GAZ ET PROCEDE PERMETTANT DE FAIRE FONCTIONNER LADITE TURBINE

(30) Priorität: 21.07.2000 DE 10035676
(43) Veröffentlichungstag der Anmeldung: 16.04.2003
(73) Patentinhaber: SIEMENS AKTIENGESELLSCHAFT, 80333 München (DE)
(72) Erfinder: ZIEGNER, Manfred, 45479 Mülheim a.d. Ruhr (DE)
(86) Internationale Anmeldenummer: PCT/DE2001/002526
(87) Internationale Veröffentlichungsnummer: WO 2002/008592

(56) Entgegenhaltungen:
- DE-A- 4 330 613
- DE-A- 19 604 416
- DE-C- 876 936
- US-A- 2 671 314
- US-A- 3 623 317
- US-A- 3 740 948

## Beschreibung

Die Erfindung betrifft eine Gasturbine mit einem Verdichter, einer Brennkammer und einem Turbinenteil sowie mit einer Kühlluftversorgung zur Abzweigung eines Kühlluftstroms von einem Verbrennungsluftstrom und zur Zuführung dieses Kühlluftstroms zu einem thermisch belasteten Bauteil. Die Erfindung betrifft auch ein Verfahren zum Betrieb einer Gasturbine.

Die DE 43 30 613 A1 offenbart ein Verfahren und eine Vorrichtung zum Betrieb einer Gasturbine. Die Gasturbine weist ein von einem sich entspannenden und mechanische Arbeit leistenden Treibgas durchströmtes Turbinenteil auf. Dem Treibgas wird ein Brennstoff zugeführt, der in dem Turbinenteil verbrennt. Der Brennstoff zur Verbrennung in dem Turbinenteil wird einem diesem Turbinenteil zuzuführenden Kühlluftstrom beigemischt. Der Anteil des Brennstoffs in dem Kühlluftstrom ist so bemessen, dass eine Selbstzündung des Gemisches ausgeschlossen ist.

Die WO 97/29274 zeigt ein Verfahren zur Entspannung eines Rauchgasstroms in einer Turbine sowie eine entsprechende Turbine. Ein thermisch hoch belastetes Bauteil der Turbine wird mittels eines zugehörigen Kühlgasstroms gekühlt, der das Bauteil durchströmt und aus diesem Bauteil dem Rauchgasstrom zugeführt wird. Dem Rauchgasstrom in der Turbine wird Brennstoff derart zudosiert, dass eine Temperaturabsenkung in dem Rauchgasstrom, die sich ergibt durch Zuführung des Kühlgasstroms ohne Zudosierung des Brennstoffs, durch Verbrennung des zudosierten Brennstoffs kompensiert wird. Durch die zusätzliche Verbrennung von Brennstoff wird die Leistung der Turbine erhöht, ohne dass die Temperatur des Rauchgases beim Eintritt in die Turbine steigen muss. Bei gleicher Auslegung der Turbine und bei gleicher Auswahl der zu ihrem Bau verwendeten Werkstoffe wird somit die von einer Gasturbine, zu der die Turbine gehört, abgegebene Nutzarbeit deutlich erhöht. Außerdem wird vermieden, dass sich der Rauchgasstrom über die durch die Entspannung vorgegebene Temperaturabsenkung weiter abkühlt. Dies verbessert den thermodynamischen Wirkungsgrad der Turbine. Durch die zusätzliche Verbrennung von Brennstoff wird in der Turbine im wesentlichen derjenige Zustand hergestellt, der ohne das Vorsehen von Kühlgasströmen herrschen würde. In dem Fall, in dem der Kühlgasstrom im wesentlichen aus Luft besteht, wird der Brennstoff zu einem Gewichtsanteil von höchstens 2% dem Kühlgasstrom zugemischt. In diesem Mischungsverhältnis ist eine unbeabsichtigte Zündung des Gemisches aus Luft und Brennstoff im wesentlichen ausgeschlossen, insbesondere dann, wenn der Brennstoff homogen in den Kühlgasstrom eingemischt ist.

Aufgabe der Erfindung ist die Angabe einer Gasturbine, bei der mit vergleichsweise geringem Aufwand ein besonders hoher Wirkungsgrad, eine hohe spezifische Leistung und besonders niedrige Stickoxidemissionen erzielt werden. Weitere Aufgabe der Erfindung ist die Angabe eines entsprechenden Verfahrens zum Betrieb einer Gasturbine.

Erfindungsgemäß wird die auf eine Gasturbine gerichtete Aufgabe gelöst durch eine Gasturbine mit einem Verdichter zur Erzeugung eines entlang einer Strömungsrichtung strömenden, verdichteten Verbrennungsluftstroms, einem Heißgasbereich, umfassend eine Brennkammer und ein Turbinenteil mit einem Heißgasströmungskanal und einer Kühlluftversorgung zur Abzweigung eines Kühlluftstroms von dem Verbrennungsluftstrom an einer Abzweigungsposition und zur Zuführung zu einem thermisch belasteten Heißgasbauteil des Heißgasbereichs, wobei eine Brennstoffzugabeeinrichtung zur Zugabe von Brennstoff zum Verbrennungsluftstrom an einer Brennstoff-Zugabeposition vorgesehen ist, und wobei die Brennstoff-Zugabeposition in Strömungsrichtung vor der Abzweigungsposition angeordnet ist.

Die Erfindung schlägt somit den ungewöhnlichen Weg ein, Brennstoff zum Verbrennungsluftstrom nicht erst gezielt in einen bereits abgezweigten Kühlluftstrom beizumischen, der nur noch über eine vergleichsweise kurze Strecke bis zum Turbinenteil strömt. Vielmehr wird bereits Brennstoff vor der Abzweigung des Kühlluftstroms beigemischt. Dies führt zu einer auf den ersten Blick abwegigen Durchströmung der gesamten Kühlluftversorgung mit einem Brennstoff-/Verbrennungsluft-Gemisch. Die Erfindung geht hierbei von der Erkenntnis aus, dass das Risiko einer Selbstentzündung eines solchen Gemisches im Bereich der Kühlluftversorgung tatsächlich beherrschbar ist. Entgegen der vorherrschenden Meinung ist es nach Erkenntnis der Erfindung möglich, unter Berücksichtigung von Zündtemperaturen und Zündverzugszeiten des in der Kühlluftversorgung entstehenden Gemisches eine Selbstzündung praktisch auszuschließen. Diese, nach dem bisherigen Stand der Technik nie ernsthaft in Erwägung gezogene Möglichkeit, bietet eine Reihe von Vorteilen:

Die in der Kühlluftversorgung strömende Kühlluft ist für den eigentlichen Gasturbinenprozess zur Erzeugung mechanischer Energie in herkömmlicher Technik verloren, da sie lediglich der Kühlung hoch belasteter Bauteile dient und nicht am Verbrennungsprozess teilnimmt. Durch die Beimischung von Brennstoff zur Kühlluft ist es möglich, den so mit Brennstoff versetzten Kühlluftstrom nach erfolgter Kühlung im Heißgasbereich der Gasturbine brennen zu lassen. Hierdurch wird auch durch den Kühlluftstrom Arbeit geleistet und der Wirkungsgrad der Gasturbine steigt. Gleichzeitig steigt aber etwa bei Nutzung des Kühlluftstroms zur Kühlung einer Gasturbinenschaufel die ISO-Temperatur der Gasturbine nicht. Die ISO-Temperatur ist die fiktive, rechnerische Turbinen-Eintrittstemperatur einer gekühlten Gasturbine. Sie ist kleiner als die Verbrennungstemperatur, die in der Primärzone der Brennkammer vorliegt. Die Differenz zwischen Verbrennungstemperatur und ISO-Temperatur steigt mit der Kühlluftmenge, die ihrerseits mit der ISO-Temperatur steigt. Typische ISO-Temperaturen großer stationärer Gasturbinen liegen etwa bei 1200 °C, während die Verbrennungstemperaturen bei ca. 1400 °C liegen. Für einen hohen Wirkungsgrad und für eine hohe spezifische Leistung der Gasturbine kommt es auf eine möglichst geringe Differenz zwischen Verbrennungstemperatur und ISO-Temperatur an. Es besteht also ein hoher Anreiz zur Steigerung der ISO-Temperatur bei gegebener Verbrennungstemperatur bzw. zur Senkung der Verbrennungstemperatur bei gegebener ISO-Temperatur. Die Verbrennungstemperatur wird vom Verhältnis zwischen Brennstoffmenge zu Brennluftmenge bestimmt. Die Kühlluftmenge wird vom Verbrennungsluftstrom abgezweigt. Nach herkömmlicher Technik gilt somit für die verbleibende Brennluftmenge, dass sie gleich der vom Verdichter angesaugten Luftmenge verringert um die Kühlluftmenge ist. Eine erste Möglichkeit zur Verkleinerung des Verhältnisses zwischen der Brennstoffmenge und der Brennluftmenge ist die Vergrößerung der Brennluftmenge durch eine Verringerung der Kühlluftmenge. In herkömmlicher Technik wird daher alles versucht, mit einer möglichst geringen Kühlluftmenge auszukommen. Das Potential dieser Vorgehensweise ist allerdings beschränkt. Direkte Kühllufteinsparung ist bei optimal ausgelegten Kühlluftsystemen kaum noch möglich und erhöht das Risiko der Bauteilüberhitzung.

Eine zweite Möglichkeit zur Senkung des Verhältnisses zwischen Brennstoffmenge und Brennluftmenge ist die Verkleinerung der in der Brennkammer verbrannten Brennstoffmenge. Da die Brennstoffmenge durch die zu fahrende Leistung diktiert wird, ist dies nur möglich, wenn ein Teil des Brennstoffes von dem in die Brennkammer strömenden Brennluftstrom auf geeignete andere Zusatzbrennluftströme übertragen und nicht in der Brennkammer sondern thermodynamisch günstig auf hohem Temperaturniveau - möglichst vor der Expansion in dem Turbinenteil - verbrannt wird. Mit der Erfindung wird dies dadurch realisiert, dass der Brennstoff vor der Abzweigung des Kühlluftstromes zugemischt wird und nach Kühlung des Heißgasbauteils im Heißgasbereich der Gasturbine verbrennt.

Neben einem hohem Wirkungsgrad und einer hohen spezifischen Leistung einer Gasturbine ist eine weitere sehr wichtige Anforderung ein geringer Schadstoffausstoß, wobei es insbesondere auf niedrige Stickoxidemissionen ankommt. Die Entstehung von Stickoxiden ist exponentiell mit einer steigenden Flammentemperatur verknüpft. Bei einer inhomogenen Temperaturverteilung in einer Verbrennungszone wird die Stickoxidemission wesentlich von den Maximaltemperaturen bestimmt. Man ist daher bestrebt, eine möglichst homogene Temperaturverteilung zu erreichen. Dies ist insbesondere durch eine weitgehend Vermischung von Brennstoff und Verbrennungsluft zu erreichen. Bei Gasturbinen herkömmlicher Bauart wird der wesentliche Teil des Brennstoffes der Verbrennungsluft erst beim Eintritt in die Brennkammer beigemischt. Bei den hohen Strömungsgeschwindigkeiten liegt eine relativ kurze Mischstrecke vor, so dass sich Brennstoff und Verbrennungsluft nicht optimal homogen vermischen. Ein ähnliches Problem besteht bei der bekannten Zugabe von Brennstoff zu einzelnen Kühlluftströmen kurz vor dem Einströmen in das Turbinenteil. Es werden häufig Maßnahmen ergriffen, das Brennstoff-Verbrennungsluft-Gemisch durch eine intensivere Vermischung zu homogenisieren. Diese Maßnahmen beruhen aber grundsätzlich auf der Erzeugung hoher Turbulenz im Verbrennungsluftstrom und haben daher alle einen zusätzlichen Druckverlust im Kühlluftstrom zur Folge. Demgegenüber wird mit der Erfindung durch die Erzielung einer großen Mischstrecke eine sehr gute Durchmischung von Brennstoff und Verbrennungsluft erreicht, ohne dabei zusätzlich Mischer im Kühlluftstrom anzuordnen. Ein zusätzlicher Druckverlust tritt somit nicht auf.

Bevorzugtermaßen ist die Brennstoffzugabe-Einrichtung so ausgelegt, dass über sie mindestens 80% eines insgesamt pro Zeiteinheit verbrennenden Brennstoff-Massenstroms zuführbar ist. Der größte Teil des in der Gasturbine zu verbrennenden Brennstoffs wird somit bereits vor der Abzweigungsposition dem Verbrennungsluftstrom zugemischt. Wie oben ausgeführt, wurde bei bisherigen Maßnahmen zur Kühlluftnachheizung Brennstoff lediglich nach Abzweigung des Kühlluftstroms im Bereich des Turbinenteils zugeführt. Zudem wurde bisher die Brennstoffdosierung sehr niedrig bemessen, um das Risiko einer Selbstzündung auszuschließen. Nunmehr wird auch der Kühlluftstrom schon so weit mit Brennstoff angereichert, dass sich ein vergleichbares Gemisch zu dem in der Brennkammer verbrennenden Gemisch ergibt. Diese gegenüber herkömmlichen Ausführungsformen erheblich vorverlegte Zugabe des wesentlichen Brennstoffteils bedeutet gewissermaßen, dass die in der Brennkammer angeordneten Brenner der Gasturbine auf die Ausgestaltung einer geeigneten, kanalisierten Öffnung reduziert sind. Die Brennstoffzugabe erfolgt somit nicht mehr in den Brenner, sondern gegebenenfalls erheblich in Strömungsrichtung vor dem Brenner, was zu einer verbesserten Durchmischung von Brennstoff und Verbrennungsluft vor Eintritt in die Brennkammer führt. Der Brenner dient im wesentlichen noch zur Flammenhalterung durch etwa ein geeignet gestaltetes Drallgitter. Weiterhin kann ein Pilotbrenner vorgesehen sein, der der Stabilisierung einer mageren Vormischverbrennung dient. Dem Pilotbrenner wird allerdings ein wesentlich kleinerer Anteil an dem insgesamt zu verbrennenden Brennstoff zugeführt.

Vorzugsweise ist die Brennstoffzugabe-Einrichtung mit einem Brennstoffreservoir für einen gasförmigen Brennstoff, insbesondere Methan, verbunden. Der gasförmige Brennstoff und zwar insbesondere Methan, ist hinsichtlich seiner Zündtemperatur und der Zündverzugszeit besonders geeignet für eine Früheinmischung in den Verbrennungsluftstrom vor Abzweigung des Kühlluftstroms. Umfangreiche Laborversuche zum Selbstzündverhalten von Methan/Luftgemischen konnten nachweisen, dass das Risiko der Selbstzündung trotz der frühen Einmischung des Brennstoffs praktisch ausgeschlossen ist. Gegebenenfalls kann die Zündtemperatur und/oder auch die Zündverzugszeit durch Beimischung längerkettiger Kohlenwasserstoffe auch noch günstig beeinflusst werden.

Vorzugsweise ist das Heißgasbauteil eine Turbinenschaufel, weiter bevorzugt eine Leitschaufel oder eine Laufschaufel. In weiter bevorzugter Ausgestaltung gehört die Leitschaufel zu einem in Strömungsrichtung im Heißgas-Strömungskanal ersten Leitschaufelkranz bzw. die Laufschaufel zu einem in Strömungsrichtung im Heißgas-Strömungskanal ersten Laufschaufelkranz. Gerade der erste Leitschaufelkranz ist durch die noch sehr hohen Temperaturen des aus der Brennkammer austretenden Heißgases besonders hohen thermischen Belastungen unterworfen. Dementsprechend muss eine besonders hohe Kühlluftmenge aufgewendet werden, um diesen Leitschaufelkranz zu kühlen. Entsprechendes gilt auch für den ersten Laufschaufelkranz. Indem nun der für diese Kühlung verwendeten Kühlluft Brennstoff zugemischt wird, kann diese Kühlluft nach erfolgter Kühlung durch Austritt in den Heißgas-Strömungskanal noch zu einer Nachverbrennung genutzt werden. Diese Verbrennung zündet spontan durch die hohen Temperaturen im Heißgas-Strömungskanal. Somit wird die Kühlluft nicht nur zu Kühlzwecken genutzt, sondern nimmt auch am Arbeitsprozess der Gasturbine teil.

Vorzugsweise ist das Heißgasbauteil ein Wandsegment einer inneren Auskleidung der Brennkammer. Zum Beispiel kann ein solches Wandsegment ein keramischer Brennkammerstein sein. Auch die innere Auskleidung einer Gasturbine muss durch die hohe thermische Belastung gekühlt werden. Durch die Zumischung von Brennstoff zu dieser Kühlluft wird die in die Brennkammer austretende Kühlluft auch zur Verbrennung genutzt. Da diese Verbrennung im Wandbereich der Brennkammer und nicht in deren Primärzone erfolgt, führt diese zusätzliche Verbrennung nicht zu einer Erhöhung der Verbrennungstemperatur. Gleichwohl wird der Energieeintrag in die Brennkammer und damit die Turbinen-eintrittstemperatur erhöht.

Vorzugsweise liegt die Brennstoff-Zugabeposition im Verdichter, weiter bevorzugt umfaßt die Brennstoffzugabeeinrichtung dabei eine Verdichterleitschaufel. Die Brennstoffzugabeeinrichtung, die z.B. auch eine Brennstoffpumpe umfassen kann, weist in ihrem Auslassbereich somit eine Verdichterleitschaufel auf, über die der Brennstoff in den verdichteten Verbrennungsluftstrom eingelassen wird.

Erfindungsgemäß wird die auf ein Verfahren gerichtete Aufgabe gelöst durch ein Verfahren zum Betrieb einer Gasturbine mit einem Verdichter und einem Heißgasbereich, umfassend eine Brennkammer und ein Turbinenteil mit einem Heißgas-Strömungskanal, bei dem ein entlang einer Strömungsrichtung strömender, verdichteter Verbrennungsluftstrom im Verdichter erzeugt wird, dem Verbrennungsluftstrom Brennstoff an einer Brennstoffzugabeposition zugeführt wird, von dem so erzeugten Verbrennungsluft/Brennstoff-Gemisch ein Kühlluftstrom abgezweigt wird, der Kühlluftstrom einem im Heißgasbereich angeordneten, thermisch hoch belasteten Heißgasbauteil zugeführt wird.

Die Vorteile eines solchen Verfahrens ergeben sich entsprechend den obigen Ausführungen zu den Vorteilen der Gasturbine.

Vorzugsweise wird als Brennstoff Methan verwendet. Weiter bevorzugt werden dem Methan längerkettige Kohlenwasserstoffe beigemischt.

Bevorzugtermaßen wird durch den Kühlluftstrom eine Leitschaufel eines in Strömungsrichtung ersten Leitschaufelkranzes des Turbinenteils gekühlt.

Vorzugsweise wird durch den Kühlluftstrom eine Laufschaufel eines in Strömungsrichtung ersten Laufschaufelkranzes des Turbinenteils gekühlt.

In bevorzugter Ausgestaltung erfolgt die Zuführung des Brennstoffs zum Verbrennungsluftstrom über eine Verdichterleitschaufel, weiter bevorzugt über eine Verdichterleitschaufel eines in Strömungsrichtung letzten Leitschaufelkranzes des Verdichters.

Vorzugsweise wird dem Verbrennungsluftstrom an der Brennstoffzugabeposition mindestens 80% eines insgesamt pro Zeiteinheit verbrennenden Brennstoffmassenstroms zugeführt.

Alle oben aufgeführten bevorzugten Ausgestaltungen der Erfindung lassen sich auch untereinander in allen Kombinationen kombinieren, also gemeinsam einsetzen. Insbesondere ist bevorzugt, dass mehrere Kühlluftversorgungen zur Kühlung mehrerer Heißgasbauteile, insbesondere des ersten Leit- und Laufschaufelkranzes und der Brennkammer, vorgesehen sind. Bevorzugtermaßen erfolgt die beschriebene Brennstoffzugabe zur Kühlluft bei mindestens 50% der insgesamt zur Kühlung der Gasturbine aufgewendeten Gesamtkühlluftmenge.

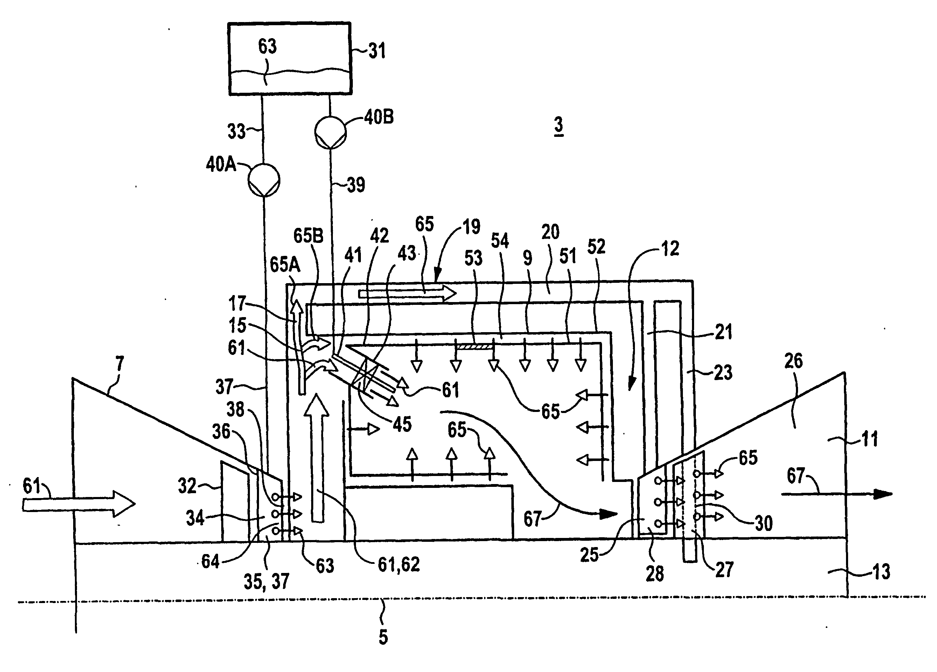

Die Erfindung wird in einem Ausführungsbeispiel näher erläutert. Die einzige Figur zeigt schematisch und nicht maßstäblich eine Gasturbine 3 in enem Längsschnitt.

Entlang einer Achse 5 hintereinander angeordnet sind ein Verdichter 7, eine Brennkammer 9 und ein Turbinenteil 11. Der Verdichter 7 und das Turbinenteil 11 sind auf einem gemeinsamen Rotor 13 angeordnet. Der Verdichter 7 ist mit der Brennkammer 9 über einen Verbrennungsluftkanal 15 verbunden. An einer Abzweigungsposition 17 ist der Verbrennungsluftkanal 15 mit einer Kühlluftversorgung 19 verbunden. Die Kühlluftversorgung 19 umfaßt einen ersten Kühlluftkanal 20, von dem ein erster Sekundärkühlluftkanal 21 und ein zweiter Sekundärkühlluftkanal 23 abzweigen. Der erste Sekundärkühlluftkanal 21 ist mit einer hohlen Leitschaufel 25 eines Leitschaufelkranzes 28 des Turbinenteils 11 verbunden. Der Leitschaufelkranz 28 ist ein in Strömungsrichtung erster Leitschaufelkranz 28 des Turbinenteils 11. Der zweite Sekundärkühlluftkanal 23 ist mit einer Laufschaufel 27 eines Laufschaufelkranzes 30 des Turbinenteils 11 verbunden. Der Laufschaufelkranz 30 ist ein in Strömungsrichtung erster Laufschaufelkranz 30 des Turbinenteils 11. Der Leitschaufelkranz 28 und der Laufschaufelkranz 30 sind in einem Heißgas-Strömungskanal 26 des Turbinenteils 11 angeordnet. Der Laufschaufelkranz 30 ist mit dem Rotor 13 verbunden, während der Leitschaufelkranz 28 mit dem Gehäuse des Turbinenteils 11 verbunden ist. Das Turbinenteil 11 weist weitere Leit- und Laufschaufelkränze auf, die aber der Übersichtlichkeit halber nicht dargestellt sind.

Im Verdichter 7 sind ebenfalls aufeinander folgend Leit- und Laufschaufelkränze angeordnet, wobei hier nur ein letzter Laufschaufelkranz 32 und ein letzter Leitschaufelkranz 36 gezeigt sind. Der Leitschaufelkranz 36 weist eine hohle Verdichterleitschaufel 35 auf, die über eine Hauptbrennstoffleitung 33 mit einem Brennstoffreservoir 31 verbunden ist. In der Hauptbrennstoffleitung 33 ist eine Brennstoffhauptpumpe 40A angeordnet. Die Hauptbrennstoffleitung 33, die Brennstoffhauptpumpe 40A und die Verdichterleitschaufel 35 sind Teil einer Brennstoff-Zugabeeinrichtung 37. Aus der hohlen Verdichterleitschaufel 35 ist über Öffnungen Brennstoff an einer hierdurch definierten Brennstoffzugabeposition 38 auslassbar.

Das Brennstoffreservoir 31 ist mit einer Sekundär-Brennstoffleitung 39, in der eine Sekundär-Brennstoffpumpe 40B angeordnet ist, mit einem Pilotbrenner 41 verbunden. Der Pilotbrenner 41 ist konzentrisch von einem Vormischbrennkanal 42 umgeben. In dem Vormischbrennkanal 42 ist ein Drallgitter 43 angeordnet. Der Vormischbrennkanal 42 mündet in die Brennkammer 9. Er ist auf seinem der Brennkammer 9 abgewandten Ende zum Verbrennungsluftkanal 15 geöffnet. Die Brennkammer 9 weist eine innere Auskleidung 51 auf. Diese innere Auskleidung 51 ist aus Wandsegmenten 53 gebildet, von denen nur eines beispielhaft gezeigt ist. Die innere Auskleidung 51 ist an einer Tragstruktur 52 der Brennkammer 9 montiert. Zwischen der Tragstruktur 52 und der inneren Auskleidung 51 verbleibt ein Zwischenraum 54.

Im Betrieb der Gasturbine 3 wird Außenluft als Verdichterluft 61 vom Verdichter 7 angesaugt und hoch komprimiert. Der so verdichtete Luftstrom wird als Verbrennungsluftstrom 61 in den Verbrennungsluftkanal 15 entlang einer Strömungsrichtung 62 geleitet. Aus dem Brennstoffreservoir 31 wird mittels der Brennstoffhauptpumpe 40A über die Hauptbrennstoffleitung 33 Brennstoff 63 zur Verdichterleitschaufel 35 geleitet. Der Brennstoff 63 tritt aus Öffnungen 64 der Verdichterleitschaufel 35 aus und in den Verbrennungsluftstrom 61 ein. Im Verbrennungsluftstrom 61 vermischt sich der Brennstoff 63 entlang des Verbrennungsluftkanals 15 gut mit der Verbrennungsluft des Verbrennungsluftstroms 61. Der Verbrennungsluftstrom 61 wird sodann verzweigt:

Ein erster Teil des Verbrennungsluftstroms 61 wird als Kühlluftstrom 65A an der Abzweigungsposition in die Kühlluftversorgung 19 geleitet. Ein zweiter Teil des Verbrennungsluftstroms 61 wird als Kühlluftstrom 65B in den Zwischenraum 54 der Brennkammer 9 geleitet. Der so in mehreren Zweigen geführte Kühlluftstrom 65 dient zur Kühlung thermisch hoch belasteter Heißgasbauteile 53, 25, 27 des den Heißgasbereich 12 bildenden Teils der Gasturbine 3, umfassend die Brennkammer 9 und das Turbinenteil 11. Der Kühlluftstrom 65A wird über den ersten Sekundärkühlluftkanal 21 der Leitschaufel 25 zugeführt, die hohl ausgebildet ist. Der in die hohle Leitschaufel 25 strömende Kühlluftstrom 65A tritt über Öffnungen in den Heißgas-Strömungskanal 26 des Turbinenteils 11 aus. Entsprechend wird ein Teil des Kühlluftstroms 65A über den zweiten Sekundärkühlluftkanal 23 der hohl ausgeführten Laufschaufel 27 zugeleitet und tritt aus dieser über Öffnungen ebenfalls in den Heißgas-Strömungskanal 26 aus. Der im Zwischenraum 54 der Brennkammer 9 geführte Kühlluftstrom 65B tritt über Öffnungen der inneren Auskleidung 51 nach einer Kühlung dieser inneren Auskleidung 51 in die Brennkammer 9 ein.

Der größte Teil des Verbrennungsluftstroms 61 wird dem Vormischkanal 42 zugeführt, über den er in die Brennkammer 9 eintritt.

Die Zumischung des Brennstoffs 63 zum Verbrennungsluftstrom 61 über die Brennstoff-Zugabeeinrichtung 37 an der Brennstoff-Zugabeposition 38 führt dazu, dass durch die in Strömungsrichtung erst später erfolgende Abzweigung des Kühlluftstroms 65 - in Form der Kühlluftteilströme 65A und 65B - dieser Kühlluftstrom 65 mit Brennstoff 63 vermischt ist. Dabei ist bereits der größte Teil des pro Zeiteinheit der Gasturbine 3 zu verbrennenden Brennstoffs 63 über die Brennstoff-Zugabeeinrichtung 37 zugeführt. Diese ist durch entsprechende Ausgestaltung des Brennstoff-Zufuhrkanals 33, der BrennstoffHauptpumpe 40A und der Verdichterleitschaufel 35 dafür ausgelegt, diese großen Brennstoffmengen zuzuführen. Das der primären Verbrennung zugeführte Brennstoff-Luftgemisch des Verbrennungsluftstroms 61 weist somit die gleiche Mischung auf, wie der Kühlluftstrom 65. Die Kühlung mittels eines Kühlluftstroms 65, der ein zündfähiges Gemisch wie das der eigentlichen Verbrennung in der Primärzone der Brennkammer 9 zugeführte Gemisch aufweist, ist eine ungewöhnliche und auf den ersten Blick abwegige Maßnahme, da einer Selbstzündung im Kühlluftstrom 65 erhebliche Schäden bis hin zu einer völligen Zerstörung der Gasturbine 3 die Folge zu sein scheint. Erstaunlicherweise ist aber gerade bei der Verwendung von Methan als Brennstoff 63 die Zündtemperatur so hoch und gleichzeitig eine Zündverzugszeit so lang, dass das Risiko einer Selbstzündung ausgeschlossen ist. Somit läßt sich also ein wesentlicher Teil der für die Kühlung der Gasturbine 3 aufgewendeten Gesamtkühlluftmenge, vorzugsweise mindestens die Hälfte dieser Gesamtkühlluftmenge, sowohl zur Kühlung als auch für eine Verbrennung nutzen, da der in die Brennkammer 9 und in den Heißgas-Strömungskanal 26 austretende Kühlstrom 65 dort aufgrund der hohen Temperaturen spontan zündet und verbrennt. Somit wird sowohl die spezifische Leistung als auch der Wirkungsgrad der Gasturbine 3 angehoben. Zudem erfolgt eine sehr gute Durchmischung des Brennstoffs 63 mit dem Verbrennungsluftstrom 61 durch die mit dem Verbrennungsluftkanal 15 entstehenden langen Mischstrecke. Dies hat eine erhebliche Reduktion von Stickoxidemissionen zur Folge.

## Patentansprüche

1. Gasturbine (3) mit .
• einem Verdichter (7) zur Erzeugung eines entlang einer Strömungsrichtung (62) strömenden, verdichteten Verbrennungsluftstromes (61),
• einem Heissgasbereich (12), umfassend eine Brennkammer (9) und ein Turbinenteil (11) mit einem Heissgasströmungskanal (26),
• und einer Kühlluftversorgung (19) zur Abzweigung eines Kühlluftstromes (65) von dem Verbrennungsluftstrom (61) an einer Abzweigungsposition (17) und zur Zuführung zu einem thermisch belasteten Heissgasbauteil (53,25,27) des Heissgasbereiches (12),
wobei
eine Brennstoffzugabeeinrichtung (37) zur Zugabe von Brennstoff (63) zum Verbrennungsluftstrom (61) an einer Brennstoffzugabeposition (38) vorgesehen ist,
**dadurch gekennzeichnet, dass** die Brennstoffzugabeposition (38) in Strömungsrichtung (62) vor der Abzweigungsposition (17) angeordnet ist.

2. Gasturbine (3) nach Anspruch 1,
bei der die Brennstoffzugabeeinrichtung (37) so ausgelegt ist, dass über sie mindestens 80% eines insgesamt pro Zeiteinheit verbrennenden Brennstoffmassenstromes zuführbar ist.

3. Gasturbine (3) nach Anspruch 1 oder 2,
bei der die Brennstoffzugabeeinrichtung (37) mit einem Brennstoffreservoir (31) für einen gasförmigen Brennstoff (63), insbesondere Methan, verbunden ist.

4. Gasturbine (3) nach Anspruch 1, 2 oder 3,
bei der das Heissgasbauteil (53,25,27) eine Turbinenschaufel (25,27) ist.

5. Gasturbine (3) nach Anspruch 4,
bei der das Heissgasbauteil (53,25,27) eine Leitschaufel (25) ist.

6. Gasturbine (3) nach Anspruch 5,
bei der das Heissgasbauteil (53,25,27) eine Leitschaufel (25) eines in Strömungsrichtung im Heissgasströmungskanal (26) ersten Leitschaufelkranzes (28) ist.

7. Gasturbine (3) nach Anspruch 5,
bei der das Heissgasbauteil (53,25,27) eine Laufschaufel (27) eines in Strömungsrichtung (62) im Heissgasströmungskanal (26) ersten Laufschaufelkranzes (30) ist.

8. Gasturbine (3) nach Anspruch 1,
bei der das Heissgasbauteil (53,25,27) ein Wandsegment (53) einer inneren Auskleidung (51) der Brennkammer (9) ist.

9. Gasturbine (3) nach Anspruch 1,
bei der die Brennstoffzugabeposition (38) im Verdichter (7) liegt.

10. Gasturbine (3) nach Anspruch 9,
bei der die Brennstoffzugabeeinrichtung (37) eine Verdichterleitschaufel (35) umfasst.

11. Gasturbine (3) nach Anspruch 10,
bei der die Verdichterleitschaufel (35) Teil eines in Strömungsrichtung (62) letzten Verdichterleitschaufelkranzes (34) ist.

12. Verfahren zum Betrieb einer Gasturbine (3) mit
• einem Verdichter (7) und
• einem Heissgasbereich (12), umfassend eine Brennkammer (9) und ein Turbinenteil (11) mit einem Heissgasströmungskanal (26),
bei dem
ein entlang einer Strömungsrichtung (62) strömender, verdichteter Verbrennungsluftstrom (61) im Verdichter (7) erzeugt wird,
dem Verbrennungsluftstrom (61) Brennstoff (63) an einer Brennstoffzugabeposition (38) zugeführt wird,
von dem so erzeugten Verbrennungsluft/Brennstoff-Gemisch ein Kühlluftstrom (65) abgezweigt wird,
der Kühlluftstrom (65) einem im Heissgasbereich (12) angeordneten, thermisch hoch belasteten Heissgasbauteil (53,25,27) zugeführt wird.

13. Verfahren nach Anspruch 12,
bei dem als Brennstoff (63) Methan verwendet wird.

14. Verfahren nach Anspruch 12,
bei dem dem Brennstoff (63)längerkettige Kohlenwasserstoffe beigemischt werden.

15. Verfahren nach Anspruch 12,
bei dem durch den Kühlluftstrom (65) eine Leitschaufel (25) eines in Strömungsrichtung (62) ersten Leitschaufelkranzes (28) des Turbinenteils (11) gekühlt wird.

16. Verfahren nach Anspruch 12,
bei dem durch den Kühlluftstrom (65) eine Laufschaufel (27) eines in Strömungsrichtung (62) ersten Laufschaufelkranzes (30) des Turbinenteils (11) gekühlt wird.

17. Verfahren nach Anspruch 12,
bei dem die Zuführung des Brennstoffes (63) zum Verbrennungsluftstrom (61) über eine Verdichterleitschaufel (35) erfolgt.

18. Verfahren nach Anspruch 17,
bei dem die Zuführung des Brennstoffes (63) zum Verbrennungsuftstrom (61) über eine Verdichterleitschaufel (35) eines in Strömungsrichtung (62) letzten Leitschaufelkranzes (34) des Verdichters (7) erfolgt.

19. Verfahren nach Anspruch 12,
bei dem mindestens 80% eines insgesamt pro Zeiteinheit verbrennenden Brennstoffmassenstromes dem Verbrennungsluftstrom (61) an der Brennstoffzugabeposition (38) zugeführt wird.

## Claims

1. Gas turbine (3) having
• a compressor (7) for generating a compressed combustion air flow (61) which flows along a flow direction (62),
• a hot-gas region (12), comprising a combustion chamber (9) and a turbine part (11) with a hot gas flow duct (26),
• and a cooling air supply system (19) for branching off a cooling air flow (65) from the combustion air flow (61) at a branch position (17) and supplying it to a thermally stressed hot gas component (53, 25, 27) of the hot gas region (12),
wherein
a fuel supply device (37) is provided for the supply of fuel (63) to the combustion air flow (61) at a fuel supply position (38),
**characterized in that**
the fuel supply position (38) is arranged, viewed in the flow direction (62), before the branch position (17).

2. Gas turbine (3) method according to Claim 1,
in which the fuel supply device (37) is designed in such a way that at least 80% of a fuel mass flow being burnt in total per unit time can be supplied by means of the fuel supply device (37).

3. Gas turbine (3) method according to Claim 1 or 2,
in which the fuel supply device (37) is connected to a fuel reservoir (31) for a gaseous fuel (63), in particular methane.

4. Gas turbine (3) method according to Claim 1, 2 or 3,
in which the hot gas component (53, 25, 27) is a turbine blade/vane (25, 27).

5. Gas turbine (3) method according to Claim 4, in which the hot gas component (53, 25, 27) is a guide vane (25).

6. Gas turbine (3) method according to Claim 5, in which the hot gas component (53, 25, 27) is a guide vane (25) of a first guide vane row (28), viewed in flow direction, in the hot gas flow duct (26).

7. Gas turbine (3) method according to Claim 5, in which the hot gas component (53, 25, 27) is a rotor blade (27) of a first rotor blade row (30), viewed in flow direction (62), in the hot gas flow duct (26).

8. Gas turbine (3) method according to Claim 1, in which the hot gas component (53, 25, 27) is a wall segment (53) of an inner lining (51) of the combustion chamber (9).

9. Gas turbine (3) method according to Claim 1, in which the fuel supply position (38) is located in the compressor (7).

10. Gas turbine (3) method according to Claim 9, in which the fuel supply device (37) comprises a compressor guide vane (35).

11. Gas turbine (3) method according to Claim 10, in which the compressor guide vane (35) is part of a last compressor guide vane row (34), viewed in flow direction (62).

12. Method for operating a gas turbine (3) having
• a compressor (7) and
• a hot gas region (12), comprising a combustion chamber (9) and a turbine part (11) with a hot gas flow duct (26),
in which
a compressed combustion air flow (61) flowing along a flow direction (62) is generated in the compressor (7),
fuel (63) is supplied to the combustion air flow (61) at a fuel supply position (38),
a cooling air flow (65) is branched off from the combustion air/fuel mixture generated in this way,
the cooling air flow (65) is supplied to a thermally highly stressed hot gas component (53, 25, 27) arranged in the hot gas region (12).

13. The method according to Claim 12,
in which methane is used as the fuel (63).

14. The method according to Claim 12,
in which long-chain hydrocarbons are admixed to the fuel (63).

15. The method according to Claim 12,
in which a guide vane (25) of a first guide vane row (28), viewed in flow direction (62), of the turbine part (11) is cooled by the cooling air flow (65).

16. The method according to Claim 12,
in which a rotor blade (27) of a first rotor blade row (30), viewed in flow direction (62), of the turbine part (11) is cooled by the cooling air flow (65).

17. The method according to Claim 12,
in which the supply of the fuel (63) to the combustion air flow (61) takes place by means of a compressor guide vane (35).

18. The method according to Claim 17,
in which the supply of the fuel (63) to the combustion air flow (61) takes place by means of a compressor guide vane (35) of a last guide vane row (34), viewed in flow direction (62), of the compressor (7).

19. The method according to Claim 12,
in which at least 80% of a fuel mass flow being burnt, in total, per unit time is supplied to the combustion air flow (61) at the fuel supply position (38).

## Revendications

1. Turbine (3) à gaz comprenant :
• un compresseur (7) de production d'un courant (61) d'air de combustion comprimé s'écoulant suivant une direction (62) d'écoulement ;
• une zone (12) de gaz chaud comprenant une chambre (9) de combustion et une partie (11) de turbine ayant un canal (26) d'écoulement de gaz chaud ;
• et une alimentation (19) en air de refroidissement pour dériver un courant (65) d'air de refroidissement du courant (61) d'air de combustion en une position (17) de dérivation et pour l'envoyer à un élément (53, 25, 27) sollicité thermiquement par du gaz chaud de la zone (12) de gaz chaud,
dans laquelle
il est prévu un dispositif (37) d'addition de combustible pour additionner du combustible (63) à l'air (61) d'air de combustion en une position (38) d'addition de combustible,
**caractérisé en ce que** la position (38) d'addition de combustible est disposée en amont, suivant le sens (62) d'écoulement, de la position (17) de dérivation.

2. Turbine (3) à gaz suivant la revendication 1,
dans laquelle le dispositif (37) d'addition de combustible est conçu de manière à pouvoir envoyer par lui au moins 80 % d'un courant massique de combustible brûlant au total par unité de temps.

3. Turbine (3) à gaz suivant la revendication 1 ou 2,
dans laquelle le dispositif (37) d'addition de combustible communique avec un réservoir (31) à combustible (63) gazeux, notamment à méthane.

4. Turbine (3) à gaz suivant la revendication 1, 2 ou 3,
dans laquelle l'élément (53, 25, 27) sollicité par du gaz chaud est une aube (25, 27) de turbine.

5. Turbine (3) à gaz suivant la revendication 4,
dans laquelle l'élément (53, 25, 27) sollicité par du gaz chaud est une aube (25) directrice.

6. Turbine (3) à gaz suivant la revendication 5,
dans laquelle l'élément (53, 25, 27) sollicité par du gaz chaud est une aube (25) directrice d'une couronne (28) d'aubes directrices qui est la première dans le sens d'écoulement dans le canal (26) d'écoulement du gaz chaud.

7. Turbine (3) à gaz suivant la revendication 5,
dans laquelle l'élément (53, 25, 27) sollicité par du gaz chaud est une aube (27) mobile d'une couronne (30) d'aubes mobiles qui est la première dans le sens d'écoulement dans le canal (26) d'écoulement du gaz chaud.

8. Turbine (3) à gaz suivant la revendication 1,
dans laquelle l'élément (53, 25, 27) sollicité par du gaz chaud est un segment (53) de paroi d'un revêtement (51) intérieur de la chambre (9) de combustion.

9. Turbine (3) à gaz suivant la revendication 1,
dans laquelle la position (38) d'addition de combustible est dans le compresseur (7).

10. Turbine (3) à gaz suivant la revendication 9,
dans laquelle le dispositif (37) d'addition de combustible comprend une aube (35) directrice de compresseur.

11. Turbine (3) à gaz suivant la revendication 10,
dans laquelle l'aube (35) directrice de compresseur fait partie d'une couronne (34) d'aubes directrices de compresseur, qui est la dernière dans le sens (62) de l'écoulement.

12. Procédé pour faire fonctionner une turbine (3) à gaz comprenant :
• un compresseur (7) ; et
• une zone (12) de gaz chaud comprenant une chambre (9) de combustion et une partie (11) de turbine ayant un canal (26) d'écoulement de gaz chaud ;
dans lequel
on produit dans le compresseur (7) un courant (61) d'air de combustion comprimé s'écoulant suivant un sens (62) d'écoulement,
on envoie au courant (61) d'air de combustion du combustible (63) en une position (38) d'addition de combustible,
on dérive du mélange d'air de combustion et de combustible ainsi produit un courant (65) d'air de refroidissement,
on envoie le courant (65) d'air de refroidissement à un élément (53, 25, 27) très sollicité thermiquement par du gaz chaud et disposé dans la zone (12) du gaz chaud.

13. Procédé suivant la revendication 12,
dans lequel on utilise comme combustible (63) du méthane.

14. Procédé suivant la revendication 12,
dans lequel on mélange des hydrocarbures à chaîne longue au combustible (63).

15. Procédé suivant la revendication 12,
dans lequel on refroidit par le courant (65) d'air de refroidissement une aube (25) directrice d'une couronne (28) d'aubes directrices de la partie (11) de turbine, cette couronne étant la première dans le sens (62) d'écoulement.

16. Procédé suivant la revendication 12,
dans lequel on refroidit par le courant (65) d'air de refroidissement une aube (27) mobile d'une première couronne (30) d'aubes mobiles de la partie (11) de turbine, cette couronne étant la première dans le sens (62) d'écoulement.

17. Procédé suivant la revendication 12,
dans lequel on effectue l'envoi du combustible (63) au courant (61) d'air de combustion par une aube (35) directrice du compresseur.

18. Procédé suivant la revendication 17,
dans lequel on effectue l'envoi du combustible (63) au courant (61) d'air de combustion par une aube (35) directrice d'une couronne (34) d'aubes directrices du compresseur (7) qui est la dernière dans le sens (62) d'écoulement.

19. Procédé suivant la revendication 12,
dans lequel on envoie au moins 80 % d'un courant massique de combustible brûlant en tout par unité de temps au courant (61) d'air de combustion en la position (38) d'addition du combustible.
